Europäisches Patentamt

European Patent Office

Office européen des brevets

(19)

(11) Veröffentlichungsnummer: **0 120 327**
**B1**

(12) **EUROPÄISCHE PATENTSCHRIFT**

(45) Veröffentlichungstag der Patentschrift:
**20.11.86**

(21) Anmeldenummer: **84102056.3**

(22) Anmeldetag: **28.02.84**

(51) Int. Cl.⁴: **F 16 C 11/06, E 02 F 3/80**

(54) Gelenkverbindung.

(30) Priorität: **21.03.83 US 477117**

(43) Veröffentlichungstag der Anmeldung:
**03.10.84 Patentblatt 84/40**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**FR - A - 2 451 493**
**US - A - 3 525 448**
**US - A - 3 832 022**
**US - A - 3 841 771**

(73) Patentinhaber: **DEERE & COMPANY, 1 John Deere Road,
Moline Illinois 61265 (US)**

(72) Erfinder: **Easton, David Joseph, 2201 Thunder Ridge,
Cedar Falls Iowa 50613 (US)**

(74) Vertreter: **Sartorius, Peter et al, DEERE & COMPANY
European Office, Patent Department
Postfach 503 Steubenstrasse 36-42,
D-6800 Mannheim 1 (DE)**

ACTORUM AG

## Beschreibung

Die Erfindung bezieht sich auf eine Gelenkverbindung für ein eine Gabel aufweisendes Arbeitsgerät mit einem Tragarm, wobei in dem Tragarm und in den Schenkeln der Gabel Bohrungen vorgesehen sind und zumindest eine der Bohrungen in den Schenkeln einen konischen Teil aufweist und in den Bohrungen ein Gelenkbolzen mit einem zylindrischen Mittelteil, einem ersten äusseren einen konischen Teil aufweisenden Endteil sowie einem zweiten äusseren Endteil aufgenommen ist und auf dem zweiten Endteil ein feststellbares, ebenfalls einen konischen Teil aufweisendes Lagerelement vorgesehen ist, während zwischen den Schenkeln ein eine ballige Oberfläche aufweisender, endseitig gegen Widerlager anliegbarer Lagerteil in einem axial unverschiebbaren Gegenstück des Tragarmes aufgenommen ist.

Es ist bereits eine Gelenkverbindung zwischen einer Ladeschaufel und einem Auslegerarm bekannt (US-A-3 525 448), die aus einer an der Ladeschaufel angeordneten aus zwei Schenkeln gebildeten Gabel besteht, in deren untereinander fluchtenden Bohrungen ein Gelenkbolzen drehfest aufgenommen ist. Der Gelenkbolzen ist hierzu mit einem konischen Endteil ausgerüstet, der in der konisch ausgebildeten Bohrung des Schenkels aufgenommen ist. Auf dem dem konischen Endteil gegenüberliegenden Ende des Schraubenbolzens befindet sich ein Gewindeteil zur Aufnahme einer Mutter, die ebenfalls mit einem sich zur Mitte hin verjüngenden konischen Lagerteil ausgerüstet ist, der in die konisch ausgebildete Bohrung des zweiten Schenkels hineinragt. Zwischen den beiden Schenkeln der Lagerschaufel sitzt auf dem Gelenkbolzen eine eine ballige Lageroberfläche aufweisende Buchse, die in einem im Tragarm angeordneten ebenfalls eine ballige Oberfläche aufweisenden Ringkörper angeordnet ist. Durch Drehen der auf dem Gelenkbolzen angeordneten Mutter werden die Schenkel zusammengepresst und drücken gegen die ringförmigen Stirnkanten der Buchse, so dass diese auf dem Gelenkbolzen festgesetzt wird. Durch ständige Bewegung der Ladeschaufel und durch die hierdurch auftretenden Erschütterungen ist ein leichtes Lösen der Schraubenmutter möglich, so dass die Drehverbindung zwischen dem Lagerelement und dem Gelenkbolzen nach längerem Einsatz aufgehoben wird. Ferner entsteht durch die ringförmige Stirnkante der Buchse eine relativ hohe Abnutzung an der Stirnkante und der Innenseite des entsprechenden Schenkels, so dass nach längeren Arbeiten das Lagerelement und auch zusätzlich der Gelenkbolzen ausgetauscht werden müssen, was zu einer Verteuerung der Gelenkverbindung führt.

Demgegenüber liegt der Erfindung die Aufgabe zugrunde, die aus Gelenkbolzen und Lagerelementen gebildete Gelenkverbindung derart auszubilden und anzuordnen, dass neben einer leichten Auswechselbarkeit der Lagerelemente eine drehfeste Verbindung bei minimaler Vorspannkraft und geringem Verschleiss zwischen dem Lagerelement und dem Gelenkbolzen geschaffen wird. Diese Aufgabe ist dadurch gelöst worden, dass das eine Widerlager als auf dem Gelenkbolzen axial unverschiebbarer Ringkörper und das andere Widerlager als Feder ausgebildet ist, die sich gegen das Lagerelement abstützt, das als tassenförmige Fassung ausgebildet ist und auf den einen Endteil des Gelenkbolzens aufschiebbar und mittels eines Schraubteils festsetzbar ist. Durch die Verwendung des tassenförmigen, einen konischen Teil aufweisenden Lagerelementes, das über seine Stirnflächen und über Federelemente auf den auf dem Gelenkbolzen angeordneten Lagerteil wirkt, erhält man auf einfache Weise eine drehfeste Verbindung des Lagerteiles mit dem Gelenkbolzen bei geringer Vorspannung durch den Schraubenbolzen. Bei auftretenden Erschütterungen wird eine selbsttätige Verstellung des Schraubenbolzens durch die gleichbleibende Vorspannkraft ausgeschaltet, so dass ein Drehen des Lagerelementes auf dem Gelenkbolzen auch bei ständigem Lastwechsel zwischen dem Tragarm und dem gabelförmigen Gegenstück vermieden werden kann. Da die beiden Schenkel der Gabel nicht gegen den die ballige Oberfläche aufweisenden Lagerteil anliegen, wird der Verschleiss zwischen den Innenoberflächen der Schenkel der Gabel und den Aussenoberflächen des mittleren Lagerteils ausgeschaltet. Durch die Verwendung der konisch ausgebildeten Lagerelemente in Verbindung mit den zwischen den Lagerelementen vorgesehenen Federn wird eine spielfreie Verbindung zwischen dem Tragarm und der Gabel geschaffen. Die Gabel kann beispielsweise am oberen Ende eines Hydraulikzylinders oder auch an der Rückseite eines Arbeitswerkzeuges eines Bodenbearbeitungsgerätes oder eines Baumaschinenfahrzeuges angeordnet sein. Vorteilhaft ist es hierzu, dass das axial unverstellbare Widerlager als Buchse ausgebildet und zwischen einem Arm der Gabel und dem Lagerteil angeordnet ist und dass die Buchse einen äusseren Durchmesser aufweist, der grösser ist als der kleinere Durchmesser der konischen Bohrung in dem Arm der Gabel. Eine derartige Buchse lässt sich relativ leicht und billig fertigen.

Vorteilhaft ist es ausserdem, dass der Lagerteil eine kugelförmige Aussenoberfläche aufweist. Die Oberfläche des Lagerteils, die in vorteilhafter Weise kugelförmig ausgebildet ist, kann auch einen anderen Oberflächenverlauf aufweisen. Beispielsweise ist es möglich, die Oberfläche lediglich leicht gekrümmt auszubilden und dem entsprechenden als Lagerteil ausgebildeten Gegenstück anzupasssen. In vorteilhafter Weise können die auf den Lagerteil einwirkenden Axialkräfte von Tellerfedern ausgehen. Der Lagerteil ist in vorteilhafter Weise ein Ringkörper.

In weiterer Ausgestaltung der Erfindung ist es vorteilhaft, dass das tassenförmig ausgebildete Lagerelement eine konische Aussenoberfläche aufweist, die dem konischen Teil in der Bohrung angepasst ist. Durch die Verwendung eines tassenförmigen Lagerelementes erhält man auf einfache Weise eine gute Lagerung des Gelenkbolzens in den Schenkeln der Gabel und zum anderen die Möglichkeit, auf einfache Weise über die Tellerfedern auf den Lagerteil einzuwirken, um diesen auf dem Gelenkbolzen festzusetzen. Da der Schraubenbolzen gegen die Aussenoberfläche des tassenförmigen Lagerelementes wirkt, erhält man eine einwandfreie Anpresskraft und eine Zentrierung des Tragarmes zwischen den beiden Schenkeln der Gabel.

Vorteilhaft ist es ferner, dass der als Ringkörper ausgebildete Lagerteil mit der balligen Aussenoberfläche in einem äusseren in der Bohrung des Tragarmes fest angeordneten, eine ballige Lagerfläche aufweisenden, als Gegenstück ausgebildeten Ringkörper beweglich aufgenommen ist. Die Verwendung eines auf dem Gelenkbolzen angeordneten Ringkörpers in Verbindung mit einem als Gegenstück ausgebildeten ebenfalls eine ballige Lagerfläche aufweisenden Ringkörper gewährleistet eine einfache Lagerung bzw. Verbindung zwischen dem Tragarm und dem Gelenkbolzen mit der Möglichkeit, gewisse Fertigungsungenauigkeiten auszugleichen, ohne dass es zu Verspannungen zwischen dem Tragarm und dem Gelenkbolzen kommt. Bei Verschleiss der Lagerelemente ist nach Lösen des Schraubenbolzens und des tassenförmigen Lagerelementes eine leichte Entfernung des inneren Ringkörpers möglich. Dabei ist es vorteilhaft, dass der Schraubteil ein Schraubenbolzen ist, der gegen die Aussenoberfläche des tassenförmigen Lagerelementes zur Anlage bringbar ist, und dass durch Drehen des Schraubenbolzens die konischen Teile des Lagerelementes und des Gelenkbolzens aufeinander zubewegt und diese dadurch in die konischen Teile der Bohrungen der Schenkel hineingepresst werden. Damit sich der innere Ringkörper nicht gegen die Schenkel der Gabel abstützt, ist es vorteilhaft, dass sich an den mittleren zylindrischen Teil des Gelenkbolzens eine Schulter anschliesst, gegen die sich der Ringkörper abstützt. Dabei ist es vorteilhaft, dass die Schulter innerhalb der Bohrung vorgesehen ist.

Eine einwandfreie Verbindung zwischen dem Gelenkbolzen und dem Tragarm wird dadurch geschaffen, dass in einem Endteil des Gelenkbolzens zur Aufnahme des Schraubenbolzens eine Gewindebohrung vorgesehen ist, wobei zwischen dem Schraubenbolzen und dem Endteil ein Federelement einsetzbar ist. Durch Drehen des Schraubenbolzens wirkt das tassenförmige Lagerelement über die Tellerfedern auf den Ringkörper und schafft dadurch eine drehfeste Verbindung zwischen dem Ringkörper und dem Gelenkbolzen, ohne dass bei längerem Arbeitseinsatz die Drehverbindung zwischen dem Ringkörper und dem Gelenkbolzen aufgehoben wird, da durch die Federn eine gleichmässige Vorspannkraft erzielt wird. Ein selbsttätiges Lösen des Schraubenbolzens wird einmal durch die Federn zwischen dem Ringkörper und dem Lagerelement und zum anderen durch das zusätzliche Federelement zwischen dem Schraubenbolzen und der Aussenoberfläche des Lagerelementes verhindert.

In weiterer Ausgestaltung der Erfindung ist es vorteilhaft, dass das tassenförmige Lagerelement eine dem Aussendurchmesser des zylindrischen Teils des Gelenkbolzens angepasste Sacklochbohrung sowie einen konisch ausgebildeten Lagerteil aufweist, der in die konisch ausgebildete Bohrung des Schenkels einsetzbar ist.

In weiterer Ausgestaltung der Erfindung ist es weiterhin vorteilhaft, dass der Aussenteil des Lagerelementes zylinderförmig ausgebildet ist und die Sacklochbohrung sich nach innen konisch verjüngt und auf einen konisch ausgebildeten Endteil des Gelenkbolzens aufschiebbar und mittels des Schraubenbolzens gegen die Feder zur Anlage bringbar ist, die den Ringkörper gegen die Buchse oder die Schulter presst. Durch die Verwendung der beiden konischen Teile, die beispielsweise beide am Gelenkbolzen vorgesehen sein können, lässt sich auf einfache Weise durch Drehen des Schraubenbolzens der Ringkörper auf dem Gelenkbolzen festsetzen, ohne dass hierzu die Schenkel der Gabel verspannt werden, da nur geringe Kräfte auf die beiden Schenkel wirken. Ausserdem ist es vorteilhaft, dass der äussere Ringkörper mittels zweier Arretierungsringe in der Bohrung des Tragarmes gegen axiales Verstellen sicherbar ist, wobei die Arretierungsringe gegen die aussenliegenden Stirnseiten des Ringkörpers anliegen.

In der Zeichnung sind zwei Ausführungsbeispiele einer Befestigungsvorrichtung nach der Erfindung schematisch dargestellt. Es zeigt:

Fig. 1 einen Querschnitt durch eine Gelenkverbindung,

Fig. 2 ein weiteres Ausführungsbeispiel einer Gelenkverbindung im Längsschnitt.

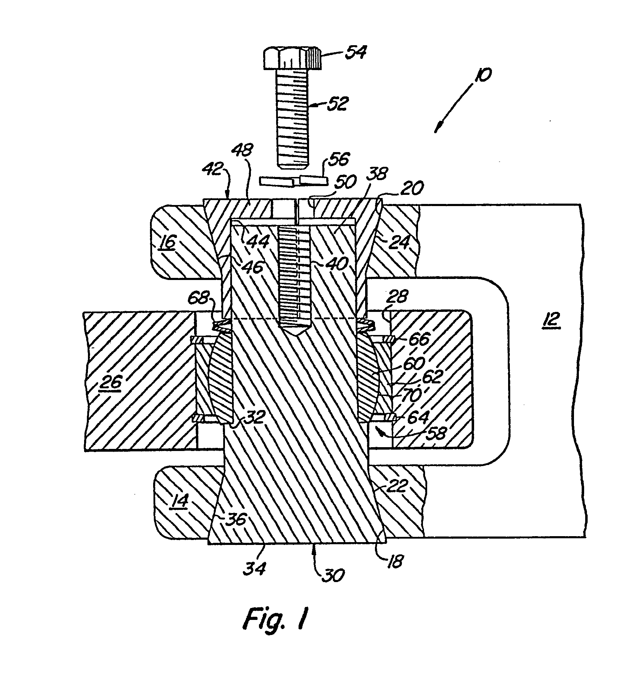

In der Zeichnung ist in Fig. 1 eine Gelenkverbindung 10 für einen Auslegerarm einer Ladeschwinge eines Bodenbearbeitungsgerätes mit einer endseitig angeordneten Gabel 12 dargestellt, die aus zwei gegenüberliegenden Armen 14 und 16 gebildet ist, die mit untereinander fluchtenden Bohrungen 18 und 20 versehen sind. Eine jede Bohrung 18 und 20 in den Armen 14 bzw. 16 hat eine konisch verlaufende Oberfläche 22 und 24, die sich zur Aussenoberfläche der Arme 14 und 16 vergrössert bzw. konisch erweitert. Ein Mittelstück bzw. ein Tragarm 26, der beispielsweise auch eine Kolbenstange eines Hydraulikzylinders sein kann, befindet sich zwischen den Armen 14 und 16. Die Kolbenstange bzw. der Tragarm 26 weist eine Bohrung 28 auf, die konzentrisch zu den Bohrungen 18 und 20 in den Armen 14 und 16 ausgerichtet ist. In den Bohrungen 18, 20 und 28 ist ein Gelenkbolzen 30 aufgenommen, der mit einem zylindrischen Mittelteil versehen ist, an den sich eine Schulter 32 anschliesst. In vorteilhafter Weise befindet sich die Schulter 32 innerhalb der Bohrung 28 des Tragarmes bzw. der Kolbenstange 26. Der Gelenkbolzen 30 weist einen äusseren kegelstumpfförmigen, sich nach innen verjüngenden Teil 36 auf, der durch eine äussere Fläche 34 begrenzt wird. Der Gelenkbolzens 30 ist ferner mit einem zylindrischen Endteil 38 ausgerüstet, der in der Bohrung 20 des Armes 16 aufgenommen ist. In dem Endteil 38 befindet sich eine axial verlaufende Gewindebohrung 40 zur Aufnahme eines Schraubenbolzens 52.

Ein Lagerelement bzw. eine tassenförmige Fassung 42 befindet sich in der konisch ausgebildeten Bohrung 20 des Armes 16 und sitzt auf dem Endteil 38 des Gelenkbolzens 30 auf. Die Fassung 42 ist mit einer Sacklochbohrung 44 versehen, die in etwa den gleichen Durchmesser wie der Endteil 38 aufweist und die auf den Endteil 38 aufgeschoben ist. Die Fassung 42 ist mit einer kegelförmigen Andrehung 46 versehen, die mit dem konischen Teil der Bohrung 20 übereinstimmt. Die Fassung 42 ist mit einer äusseren Bodeplatte 48 versehen, in der eine Bohrung 50 koaxial zur Gewindebohrung 40 angeordnet ist. Die Fassung 42 ist so ausgebildet, dass sie ständig auf dem Gelenkbolzen 30 aufsitzt und mittels des Schraubenbolzens 52 gesichert wird, der hierzu mit einem Schraubenkopf 54 ausgerüstet ist. Der Schraubenkopf 54 des Schraubenbolzens 52 liegt über eine Unterlagscheibe bzw. einen Federring 56 gegen die Bodenplatte 48 der Fassung 42 an und presst dadurch die Fassung 42 in den konischen Teil der Bohrung 20.

Die Gelenkverbindung 10 weist ferner eine Lageranordnung 58 auf, die aus einem inneren Ringkörper 60 mit einer balligen Aussenoberfläche besteht. Zur Lageranordnung 58 gehört ferner ein äusserer Ringkörper 62, der ebenfalls eine der balligen Aussenoberfläche angepasste Ringfläche aufweist, die auf dem Ringkörper 60 aufsitzt. Wie insbesondere aus Fig. 1 hervorgeht, sitzt der äussere Ringkörper 62 mittels einer Presspassung in der Bohrung 28 des Tragarmes 26 und wird mittels zweier Arretierungsringe 64 und 66 gesichert. Die Lageranordnung ist in einem gewissen Bereich auf dem Gelenkbolzen 30 verschiebbar gelagert, wobei die eine Seite des Ringkörpers 60 gegen die Schulter 32 anliegt, während die andere Seite gegen zwei Tellerfedern 68 zur Anlage kommt.

Die vorteilhafte Anordnung der Feder bzw. der beiden Tellerfedern 68 auf dem Gelenkbolzen 30 zwischen dem inneren Ringkörper 60 und der innenliegenden Stirnseite der Fassung 42 gestattet eine leichte Axialverschiebung des Ringkörpers 60, wobei hierzu über die Feder 68 eine Vorspannung erzielt wird, die, wie bereits ausgeführt, einerseits auf den inneren Ringkörper 60, andererseits auf die Fassung 42 wirkt. Die Verwendung von einem Paar Tellerfedern 68 ist wünschenswert und gestattet die Verwendung einer relativ dünnwandigen Fassung 42. Wird beispielsweise eine Tellerfeder verwendet, so muss die Endfläche der Fassung 42 sowie des Ringkörpers 60 entsprechend gross sein und entsprechend verlängert werden, oder es müssen wahlweise Unterlegscheiben eingeführt werden, die zwischen den Tellerfedern und den Endflächen vorgesehen werden, um eine entsprechende Fixierung zu erhalten. Die Federn bzw. Tellerfedern 68 werden mittels des Schraubenbolzens 52 zusammengedrückt, der hierzu in die Gewindebohrung 40 des Gelenkbolzens 30 eingeschraubt wird. Durch Drehen des Schraubenbolzens 52 wird der konische Teil der Fassung 42 in den konischen Teil der Bohrung 20 und der konische Teil 36 des Gelenkbolzens 30 in die Bohrung 18 hereingezogen. Die Verwendung der konisch ausgebildeten Bohrungen 18 und 20 gewährleistet einen einwandfreien Sitz des Gelenkbolzens 30. Geringe Vibrationen im Bereich des konischen Sitzteiles können zu einer Verschiebung der Lager untereinander führen, ohne dass eine Beeinträchtigung der Lagerung des Gelenkbolzens 30 erfolgt. Die Verwendung der gegeneinander anliegenden konischen Oberflächen in Verbindung mit den Tellerfedern 68 ergibt eine entsprechende Vorspannung auf dem inneren Ringkörper 60 unabhängig von dem Abstand zwischen dem inneren Ende der Fassung 42 und der anliegenden Oberfläche des Ringkörpers 60.

Durch die beschriebene Ausbildung und Anordnung der Lageranordnung 58 des Gelenkbolzens 30 kann der Schraubenbolzen 52 mit einer geringen Vorspannung eingeschraubt werden, um den inneren Ringkörper 60 auf dem Gelenkbolzen 30 festzusetzen. Die Feder bzw. die Tellerfedern 68 weisen eine nicht lineare Federkennrate auf, wodurch die Federkennrate der gesamten Vorrichtung reduziert werden kann. Unabhängig von dem bestimmten Typ der Feder, die für diese Gelenkverbindung 10 verwendet worden ist, wird darauf hingewiesen, dass auf keinen Fall die Feder bzw. die Tellerfedern vollständig zusammengedrückt werden dürfen. Sollte dies eintreten, wird eine mechanische Verbindung zwischen dem Gelenkbolzen 30 und der Fassung 42 herbeigeführt, was die Wirkung der Feder letztlich ausschaltet. Ferner wird darauf hingewiesen, dass bei normalen Arbeitsbedingungen die Presspassung des Ringkörpers 62 in der Bohrung 28 des Tragarmes 26 in Verbindung mit den Arretierungsringen 64 und 66 gesehen werden muss, durch die der äussere Ringkörper 62 auf einer bestimmten Stelle fixiert ist und gegen Drehen gesichert ist. Durch die von der Tellerfeder 68 ausgehenden Axialkräfte wird der Ringkörper 60 gegen die Schulter 32 gedrückt, wobei jedoch die eigentlichen Lagerkräfte bzw. Reibungskräfte, die auf die Gelenkverbindung 10 einwirken, beispielsweise infolge von Gelenkbewegungen, zwischen den balligen Oberflächen 70 des äusseren Ringkörpers 62 und des inneren Ringkörpers 60 wirken.

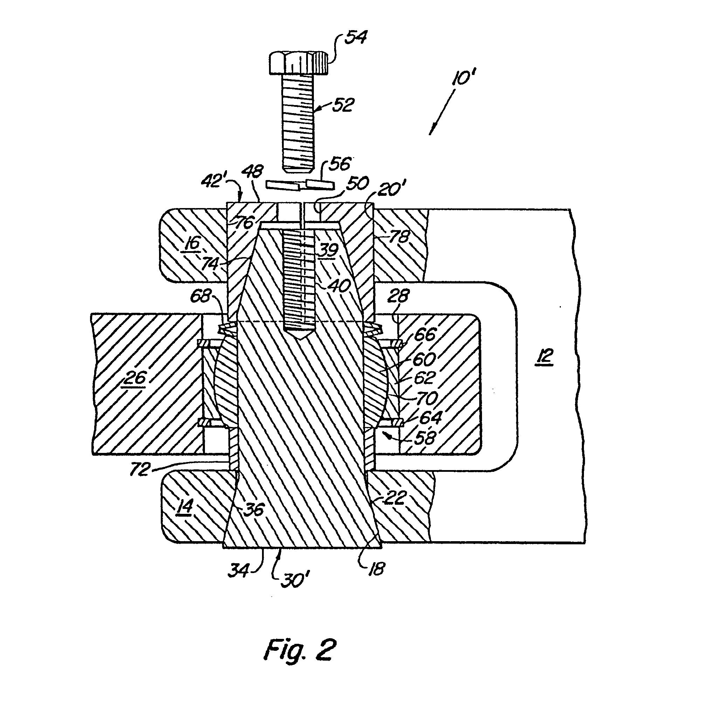

Im Ausführungsbeispiel gemäss Fig. 2 ist die Gelenkverbindung mit 10' bezeichnet. In diesem Ausführungsbeispiel sind die gleichen Teil mit den gleichen Bezugszeichen gekennzeichnet. Die Gelenkverbindung 10' weist einen Gelenkbolzen 30' auf, der jedoch nicht mit einer entsprechenden Schulter versehen ist, der jedoch zwei konisch ausgebildete Endteile 36 und 39 aufweist. Anstelle des in Fig. 1 vorgesehenen Ansatzes 32 befindet sich auf dem Mittelstück des Gelenkbolzens 30' zwischen dem Arm 14 und dem Ringkörper 60 eine Buchse 72, die einen entsprechend grossen Durchmesser aufweist, um gegen die Innenseite des Armes 14 zur Anlage kommen zu können und somit ein unverschiebbares axiales Widerlager für den Ringkörper 60 zu bilden.

Die Gelenkverbindung 10' weist ebenfalls eine tassenförmige Fassung 42' mit einer innenliegenden konischen Bohrung 74 sowie einer zylindrischen Aussenoberfläche 76, die der zylindrischen Innenoberfläche 78 der Bohrung 20' angepasst ist, auf. Die konische Bohrung 74 entspricht dem konischen Endteil 39 des Gelenkbolzens 30'. Wenn die Fassung 42' mittels des Schraubenbolzens 52 auf den Gelenkbolzen 30' gezogen wird, bilden die konische Bohrung 74 sowie die Aussenoberfläche 76 eine keilförmige Verbindung mit dem zweiten Endteil 39 des Gelenkbolzens 30' und mit der Innenoberfläche 78 der Bohrung 20'. Durch Aufziehen der Fassung 42' auf den Gelenkbolzen 30' wird die Feder 68 auf einen bestimmten Betrag zusammengedrückt, so dass die gewünschte Vorspannung auf den Ringkörper 60 ausgeübt wird, so dass entsprechende Schwingungen bzw. Toleranzen zwischen den einzelnen Bauteilen kompensiert werden können.

**Patentansprüche**

1. Gelenkverbindung (10) fürt ein eine Gabel (12) aufweisendes Arbeitsgerät mit einem Tragarm (26), wobei in dem Tragarm (26) und in den Schenkeln (14, 16) der Gabel (12) Bohrungen (18, 20, 28) vorgesehen sind und zumindest eine der Bohrungen in den Schenkeln (14 bzw. 16) einen konischen Teil aufweist und in den Bohrungen (18, 20, 28) ein Gelenkbolzen (30, 30') mit einem zylindrischen Mittelteil, einem ersten äusseren einen konischen Teil (36) aufweisenden Endteil (Fläche 34) sowie einem zweiten äusseren Endteil aufgenommen ist und auf dem zweiten Endteil ein feststellbares, ebenfalls einen konischen Teil aufweisendes Lagerelement (Fassung 42) vorgesehen ist, während zwischen den Schenkeln (14, 16) ein eine ballige Oberfläche aufweisender, endseitig gegen Widerlager anliegbarer Lagerteil (Ringkörper 60) in einem axial unverschiebbaren Gegenstück (Ring 62) des Tragarmes (26) aufgenommen ist, dadurch gekennzeichnet, dass das eine Widerlager als auf dem Gelenkbolzen (30, 30') axial unverschiebbarer Ringkörper (Schulter 32, Buchse 72) und das andere Widerlager als Feder (68) ausgebildet ist, die sich gegen das Lagerelement abstützt, das als tassenförmige Fassung (42) ausgebildet ist und auf den Endteil (38) des Gelenkbolzens (30) aufschiebbar und mittels eines Schraubteiles festsetzbar ist.

2. Gelenkverbindung nach Anspruch 1, dadurch gekennzeichnet, dass das axial unverstellbare Widerlager als Buchse (72) ausgebildet und zwischen einem Arm (14) der Gabel (12) und dem Lagerteil (Ringkörper 60) angeordnet ist.

3. Gelenkverbindung nach Anspruch 2, dadurch gekennzeichnet, dass die Buchse (72) einen äusseren Durchmesser aufweist, der grösser ist als der kleinere Durchmesser der konischen Bohrung (18) in dem Arm (14) der Gabel (12).

4. Gelenkverbindung nach Anspruch 2, dadurch gekennzeichnet, dass der Lagerteil (Ringkörper 60) eine kugelförmige Aussenoberfläche aufweist.

5. Gelenkverbindung nach einem oder mehreren der vorherigen Ansprüche, dadurch gekennzeichnet, dass der Lagerteil ein Ringkörper (60) mit gekrümmter Aussenoberfläche ist, der über den Anpressdruck der Tellerfeder gegen Drehen auf dem Gelenkbolzen (30, 30') festsetzbar ist.

6. Gelenkverbindung nach einem oder mehreren der vorherigen Ansprüche, dadurch gekennzeichnet, dass die auf den Lagerteil (Ringkörper 60) einwirkenden Axialkräfte von einer Feder ausgehen, die als Tellerfeder (68) ausgebildet ist.

7. Gelenkverbindung nach einem oder mehreren der vorherigen Ansprüche, dadurch gekennzeichnet, dass das tassenförmig ausgebildete Lagerelement (42) eine konische Aussenoberfläche aufweist, die dem konischen Teil in der Bohrung (20) angepasst ist.

8. Gelenkverbindung nach Anspruch 5, dadurch gekennzeichnet, dass der innere Ringkörper (60) mit der balligen Aussenoberfläche in einem äusseren in der Bohrung (28) des Tragarmes (26) fest angeordneten, eine konkave Lagerfläche aufweisenden, als Gegenstück ausgebildeten Ringkörper (62) beweglich aufgenommen ist.

9. Gelenkverbindung nach einem oder mehreren der vorherigen Ansprüche, dadurch gekennzeichnet, dass der Schraubteil ein Schraubenbolzen (52) ist, der gegen die Aussenoberfläche des tassenförmigen Lagerelementes (42) zur Anlage bringbar ist, und dass durch Drehen des Schraubenbolzens (52) die konischen Teile des Lagerelementes (42) und des Gelenkbolzens (30, 30') aufeinander zubewegt und diese dadurch in die konischen Teile der Bohrungen (18, 20) der Schenkel (14, 16) hineingepresst werden.

10. Gelenkverbindung nach einem oder mehreren der vorherigen Ansprüche, dadurch gekennzeichnet, dass sich an den mittleren zylindrischen Teil des Gelenkbolzens (30) ein Ansatz bzw. Schulterstück (32) anschliesst, gegen das sich der Lagerteil (60) abstützt, und die Schulter innerhalb der Bohrung (28) vorgesehen ist.

11. Gelenkverbindung nach einem oder mehreren der vorherigen Ansprüche, dadurch gekennzeichnet, dass in einem Endteil des Gelenkbolzens (30) zur Aufnahme des Schraubenbolzens (52) eine Gewindebohrung vorgesehen ist, wobei zwischen dem Schraubenbolzen und dem Endteil ein Federelement (56) einsetzbar ist.

12. Gelenkverbindung nach einem oder mehreren der vorherigen Ansprüche, dadurch gekennzeichnet, dass das tassenförmige Lagerelement (42) eine dem Aussendurchmesser des zylindrischen Teils des Gelenkbolzens (30) angepasste Sacklochbohrung (44) sowie einen konisch ausgebildeten Lagerteil aufweist, der in die konisch ausgebildete Bohrung (20) des Schenkels (16) einsetzbar ist.

13. Gelenkverbindung nach einem oder mehreren der vorherigen Ansprüche, dadurch gekennzeichnet, dass der Aussenteil des Lagerelementes (42) zylinderförmig ausgebildet ist und die Sacklochbohrung (44) sich nach innen konisch verjüngt und auf einen konisch ausgebildeten Endteil des Gelenkbolzens (30') aufschiebbar und mittels des Schraubenbolzens (52) gegen die Feder (68) zur Anlage bringbar ist, die den Ringkörper (60) gegen die Buchse (72) oder die Schulter (32) presst.

14. Gelenkverbindung nach einem oder mehreren der vorherigen Ansprüche, dadurch gekennzeichnet, dass der äussere Ringkörper (62) mittels zweier Arretierungsringe (64, 66) in der Bohrung (28) des Tragarmes (26) gegen axiales Verstellen sicherbar ist, wobei die Arretierungsringe (64, 66) gegen die aussenliegenden Stirnseiten des Ringkörpers (62) anliegen.

**Claims**

1. Swivel connection (10) for a working implement having a fork (12), the connection comprising a supporting arm (26), bores (18, 20, 28) being provided in the supporting arm (26) and the arms (14, 16) of the fork and at least one of the bores in the arms (14 and 16) having a conical portion, and an articulating pin (30, 30') with a cylindrical middle portion, a first outer end portion (surface 34) having a conical portion (36) and a second outer end portion being accommodated in the bores (18, 20, 28) and a fixable bearing element (socket 42) likewise having a conical portion being provided on the second end portion, while between the arms (14, 16) a bearing member (annular body 60) having a convex surface and adapted to bear at the ends against abutments is accommodated in an axially immovable counterpiece (ring 62) of the supporting arm (26), characterised in that one abutment is in the form of an annular body (shoulder 32, bush 72) which is axially immovable on the articulating pin (30, 30') and the other abutment is in the form of a spring (68) supported against the bearing element, which is in the form of a cup-shaped socket (42) and can be pushed onto one end portion (38) of the articulating pin (30) and be fixed in position by means of a threaded part.

2. Swivel connection according to claim 1, characterised in that the axially immovable abutment is in the form of a bush (72) and is arranged between one arm (14) of the fork (12) and the bearing member (annular body 60).

3. Swivel connection according to claim 2, characterised in that the bush (72) has an outer diameter which is larger than the smaller diameter of the conical bore (18) in the arm (14) of the fork (12).

4. Swivel connection according to claim 2, characterised in that the bearing member (annular body 60) has a spherical outer surface.

5. Swivel connection according to one or more of the preceding claims, characterised in that the bearing member is an annular body (60) with a curved outer surface which can be secured against rotation on the articulating pin (30, 30') through the contact pressure of the cup spring.

6. Swivel connection according to one or more of the preceding claims, characterised in that the axial forces acting on the bearing member (annular body 60) originate from a spring which is in the form of a cup spring (68).

7. Swivel connection according to one or more of the preceding claims, characterised in that the cup-shaped bearing element (42) has a conical outer surface which is matched to the conical portion of the bore (20).

8. Swivel connection according to claim 5, characterised in that the inner annular body (60) with the convex outer surface is movably accommodated in an outer annular body (62) fixedly arranged in the bore (28) of the supporting arm (26) and having a concave bearing surface and in the form of a counterpiece.

9. Swivel connection according to one or more of the preceding claims, characterised in that the threaded part is a screw bolt (52) which can be brought into abutment against the outer surface of the cup-shaped bearing element (42) and, by turning the screw bolt (52), the conical portions of the bearing element (42) and the articulating pin (30, 30') are moved towards one another and they are thereby forced into the conical portions of the bores (18, 20) of the arms (14, 16).

10. Swivel connection according to one or more of the preceding claims, characterised in that adjoining the middle cylindrical portion of the articulating pin (30) is a ledge or shoulder (32) against which the bearing member (60) is supported, and the shoulder is provided inside the bore (28).

11. Swivel connection according to one or more of the preceding claims, characterised in that a threaded bore is provided in one end portion of the articulating pin (30) for receiving the screw bolt (52), a spring element (56) being insertable between the screw bolt and the end portion.

12. Swivel connection according to one or more of the preceding claims, characterised in that the cup-shaped bearing element (42) has a blind bore (44) matched to the outer diameter of the cylindrical portion of the articulating pin (30) and a conically shaped bearing portion which can be inserted in the conically shaped bore (20) of the arm (16).

13. Swivel connection according to one or more of the preceding claims, characterised in that the outer part of the bearing element (42) is of cylindrical form and the blind bore (44) tapers conically inward and can be pushed over a conically shaped end portion of the articulating pin (30') and by means of the screw bolt (52) can be brought into abutment against the spring (68) which presses the annular body (60) against the bush (72) or the shoulder (32).

14. Swivel connection according to one or more of the preceding claims, characterised in that the outer annular body (62) is securable against axial displacement by means of two abutment rings (64, 66) in the bore (28) of the supporting arm (26), wherein the abutment rings (64, 66) lie against the external shoulder faces of the annular body (62).

**Revendications**

1. Dispositif de liaison articulée (10) pour outil ou instrument comportant une chape (12), comprenant un bras de support (26), des perçages (18, 20, 28) étant prévus dans le bras de support (26) et dans les branches (14, 16) de la chape (12), l'un au moins des perçages prévus dans les branches (14 ou 16) comportant une partie conique, un axe d'articulation (30, 30') muni d'une partie médiane cylindrique, d'une première partie terminale extérieure (surface 34) comportant une zone conique (36) ainsi que d'une seconde partie terminale extérieure étant reçu dans les perçages (18, 20, 28), un élément de portée pouvant être immobilisé (fourrure 42) muni également d'une zone conique étant prévu sur la seconde partie terminale, tandis qu'entre les branches (14, 16) un élément formant palier (pièce annulaire 60) muni d'une surface bombée et s'appliquant par son extrémité sur une portée est reçu dans une pièce complémentaire immobile axialement (bague 62) du bras de support (76), caractérisé en ce que l'une des portées est constituée par un élément annulaire (épaulement 32, douille 72) empêché de se déplacer axialement sur l'axe d'articulation (30, 30'), tandis quel'autre portée est constituée par un ressort (68) qui prend appui sur l'élément de portée, lequel est constitué par une fourrure en forme de cuvette (42) et peut être engagé sur l'une des parties terminales (38) de l'axe d'articulation (30) et fixé sur lui au moyen d'un organe de fixation par vissage.

2. Dispositif de liaison articulée suivant la revendication 1, caractérisé en ce que la portée immobilisée axialement a la forme d'une douille (72) et est disposée entre un bras (14) de la chape (12) et l'élement formant palier (pièce annulaire 60).

3. Dispositif de liaison articulée suivant la revendication 2, caractérisé en ce que la douille (72) a un diamètre extérieur qui est supérieur au diamètre le plus petit du perçage conique (18) prévu dans le bras (14) de la chape (12).

4. Dispositif de liaison articulée suivant la revendication 2, caractérisé en ce que l'élément formant palier (pièce annulaire 60) présente une surface extérieure en forme de rotule.

5. Dispositif de liaison articulée suivant une ou plusieurs des revendications précédentes, caractérisé en ce que l'élément formant palier est constitué par une pièce annulaire (60) munie d'une surface extérieure incurvée, qui peut être immobilisée d'une manière empêchant sa rotation sur l'axe d'articulation (30, 30') par la pression d'application exercée par le ressort Belleville.

6. Dispositif de liaison articulée suivant une ou plusieurs des revendications précédentes, caractérisé en ce que les forces axiales agissant sur l'élément formant palier (pièce annulaire 60) proviennent d'un ressort ayant la forme d'un ressort Belleville (68).

7. Dispositif de liaison articulée suivant une ou plusieurs des revendications précédentes, caractérisé en ce que l'élément de portée (42) en forme de cuvette présente une surface extérieure conique qui est adaptée à la partie conique du perçage (20).

8. Dispositif de liaison articulée suivant la revendication 5, caractérisé en ce que la pièce annulaire (60) munie d'une surface extérieure bombée est montée de manière mobile dans un organe annulaire (62) extérieur, immobilisé dans le perçage (28) du bras de support (26), présentant une surface de portée concave, et servant de pièce complémentaire.

9. Dispositif de liaison articulée suivant une ou plusieurs des revendications précédentes, caractérisé en ce que l'élément de fixation par vissage est constitué par un boulon (52) qui peut être amené dans une position d'application contre la surface extérieure de l'élément de portée en forme de cuvette (42), et en ce que les parties coniques de l'élément de portée (42) et de l'axe d'articulation (30), 30') sont rapprochées l'une de l'autre par rotation du boulon (52) et sont ainsi engagées à force dans les parties coniques des perçages (18, 20) des branches (14, 16).

10. Dispositif de liaison articulée suivant une ou plusieurs des revendications précédentes, caractérisé en ce qu'un bossage ou épaulement (32) contre lequel la pièce annulaire (60) prend appui se raccorde à la partie médiane cylindrique de l'axe d'articulation (30) et en ce que cet épaulement est prévu à l'intérieur du perçage (28).

11. Dispositif de liaison articulée suivant une ou plusieurs des revendications précédentes, caractérisé en ce qu'il est prévu un taraudage dans une partie terminale de l'axe d'articulation (30), pour la réception du boulon (52), un organe élastique (56) pouvant être inséré entre le boulon et cette partie terminale.

12. Dispositif de liaison articulée suivant une ou plusieurs des revendications précédentes, caractérisé en ce que l'élément de portée en forme de cuvette (42) présente un perçage borgne (44) adapté au diamètre extérieur de la partie cylindrique de l'axe d'articulation (30), ainsi qu'une zone de portée de forme conique qui peut être introduite dans le perçage de forme conique (20) de la branche (16).

13. Dispositif de liaison articulée suivant une ou plusieurs des revendications précédentes, caractérisé en ce que la partie extérieure de l'élément de portée (42) a une forme cylindrique, et en ce que le perçage borgne (44) va en s'amincissant selon un profil conique vers l'intérieur, peut être engagé sur une partie terminale de forme conique de l'axe d'articulation (30') et peut être amené au moyen du boulon (52) dans une position d'application contre le ressort (68) qui presse la pièce annulaire (60) contre la douille (72) ou l'épaulement (32).

14. Dispositif de liaison articulée suivant une ou plusieurs des revendications précédentes, caractérisé en ce que l'organe annulaire extérieur (62) peut être immobilisé axialement dans le perçage (28) du bras de support (26) au moyen de deux bagues de blocage (64, 66), ces bagues de blocage (64, 66) s'appliquant contre les faces terminales extérieures de l'organe annulaire (62).

Fig. 1

0 120 327

Fig. 2

11